# EUROPÄISCHE PATENTSCHRIFT

(11) **EP 0 362 127 B1**
(45) Veröffentlichungstag und Bekanntmachung des Hinweises auf die Patenterteilung: **06.10.1993**
(21) Anmeldenummer: 89810635.6
(22) Anmeldetag: 28.08.1989
(51) Int. Cl.: H01G 9/04, C22C 21/00

(54) **Kathodenfolie für Elektrolytkondensatoren**
Cathode foil for an electrolytic capacitor
Feuille de cathode pour condensateur électrolytique

(30) Priorität: 27.09.1988 CH 3591/88
(43) Veröffentlichungstag der Anmeldung: 04.04.1990
(73) Patentinhaber: ALUSUISSE-LONZA SERVICES AG, 8034 Zürich (CH)
(72) Erfinder: Werner, Martin, D-7700 Singen (DE); Bloeck, Margarete, CH-8212 Neuhausen am Rheinfall (CH); Bichsel, Heinz, CH-8212 Neuhausen am Rheinfall (CH)

(56) Entgegenhaltungen:
- EP-A- 0 024 369
- FR-A- 1 534 797
- FR-A- 2 091 651
- FR-A- 2 508 697
- WORLD ALUMINIUM ABSTRACTS, Band 7, Nr. 4, November 1974, Zusammenfassung Nr. 56-0138P; & JP-A-74 016 611 (MITSUBISHI CHEMICAL INDUSTRIES LTD) 08-06-1972

## Beschreibung

Die Erfindung betrifft die Verwendung einer Aluminiumlegierung als Werkstoff für Kathodenfolien in Elektrolytkondensatoren.

In Elektrolytkondensatoren werden heute vorwiegend Kathodenfolien aus Reinaluminium oder aus Aluminium-Mangan-Legierungen eingesetzt. Weiterhin ist bekannt, dass bei Kathodenfolien aus AlMn-Werkstoffen ein Zusatz von Kupfer erhöhte Kapazitätswerte nach dem Aetzen ergibt. Der Kupferzusatz wirkt sich jedoch nachteilig auf das Langzeitverhalten des Kondensators aus, da sich beim Aetzen gebildetes Kupferoxid mit der Zeit im Kondensatorelektrolyt löst und als metallisches Kupfer an bestimmten Stellen im Kondensator wieder ausgeschieden wird. Die ausgeschiedenen Kupferkristalle können zu elektrischen Durchschlägen im Kondensator führen und diesen vorzeitig unbrauchbar machen.

Angesichts dieser Gegebenheiten haben sich die Erfinder das Ziel gesetzt, eine als Werkstoff für Kathodenfolien in Elektrolytkondensatoren geeignete Legierung bereitzustellen, welche auch ohne Zusatz von Kupfer zu guten Kapazitätswerten nach dem Aetzen führt.

Zur erfindungsgemässen Lösung der Aufgabe führt die Verwendung einer Aluminiumlegierung aus
0,9 bis 1,7% Eisen,
0,1 bis 0,8% Mangan,
max. 0.15% Silizium,
max. 0,3 % Kupfer,
Rest Aluminium mit weiteren Begleitelementen einzeln < 0,05%, insgesamt < 0,15%, wobei die Summe der Elemente Eisen und Mangan max. 1,9% beträgt,
als Werkstoff für Kathodenfolien in Elektrolytkondensatoren.

Sämtliche Gehaltsangaben beziehen sich auf Gew.-%.

Bevorzugt liegen die Gehaltsbereiche für die Hauptlegierungselemente bei
1,0 bis 1,5% Eisen und
0,1 bis 0,5% Mangan.

Die kupferarme Legierung enthält max. 0,1%, vorzugsweise max. 0,05% Kupfer.

Die kupferreiche Legierung zeichnet sich aus durch einen Gehalt an Kupfer von 0,1 bis 0,3%.

Umfangreiche Untersuchungen an geätzten Folienproben erfindungsgemässer Legierungen haben ergeben, dass die kupferarmen Varianten gegenüber bekannten kupferarmen Legierungen höhere Kapazitätswerte aufweisen. Die kupferreichen Varianten führen zu noch höheren Kapazitätswerten.

Die Vorteilhaftigkeit der erfindungsgemässen Legierungen ergibt sich auch aus der nachfolgenden Betrachtung von Ausführungsbeispielen.

Aus Stranggussbarren vier verschiedener Legierungen wurden durch warm- und kaltwalzen Dünnbänder einer Dicke von 55µm hergestellt. Diese Folien wurden nach einem Standard-Verfahren geätzt.

Die erzielten Kapazitätswerte sind in nachstehender Tabelle zusammengestellt.

| Legierung | Si | Fe | Cu | Mn | Ti | Kapazität µF/cm² |
|---|---|---|---|---|---|---|
| A | 0,11 | 0,55 | <0,005 | 1,05 | 0,006 | 150 - 200 |
| B | 0,13 | 0,62 | 0,15 | 0,97 | 0,010 | 320 - 340 |
| C | 0,10 | 1,02 | <0,005 | 0,82 | 0,007 | 320 - 350 |
| D | 0,11 | 1,49 | <0,005 | 0,21 | 0,005 | 350 - 370 |
| Legierungsgehalte in Gew.-% A,B,C: Vergleichslegierungen D: erfindungsgemässe Legierungen | | | | | | |

## Patentansprüche

1. Verwendung einer Aluminiumlegierung aus
0,9 bis 1,7 Gew.-% Eisen,
0,1 bis 0,8 Gew.-% Mangan,
max. 0,15 Gew.-% Silizium,
max. 0,3 Gew.-% Kupfer,
Rest Aluminium mit weiteren Begleitelementen einzeln < 0,05 Gew.-%, insgesamt < 0,15 Gew.-%, wobei die Summe der Elemente Eisen und Mangan max. 1,9 Gew.-% beträgt,
als Werkstoff für Kathodenfolien in Elektrolytkondensatoren.

2. Verwendung einen Aluminiumlegierung nach Anspruch 1, dadurch gekennzeichnet, dass sie 1,0 bis 1,5 Gew.-% Eisen enthält.

3. Verwendung einen Aluminiumlegierung nach Anspruch 1, dadurch gekennzeichnet, dass sie 0,1 bis 0,5 Gew.-% Mangan enthält.

4. Verwendung einen Aluminiumlegierung nach Anspruch 1, dadurch gekennzeichnet, dass sie max. 0,1 Gew.-%, vorzugsweise max. 0,05 Gew.-% Kupfer enthält.

5. Verwendung einen Aluminiumlegierung nach Anspruch 1, dadurch gekennzeichnet, dass sie 0,1 bis 0,3 Gew.-% Kupfer enthält.

## Claims

1. Use of an aluminium alloy of
0.9 to 1.7 % by weight of iron,
0.1 to 0.8 % by weight of manganese,
max. of 0.15 % by weight of silicon,
max. of 0.3 % by weight of copper,
the remainder being aluminium with further accompanying elements individually < 0.05 % by weight and together < 0.15 % by weight, the sum of the iron and manganese elements being a max. of 1.9 % by weight,
as a material for cathode foils in electrolytic capacitors.

2. Use of an aluminium alloy according to claim 1, characterised in that it contains 1.0 to 1.5 % by weight of iron.

3. Use of an aluminium alloy according to claim 1, characterized in that it contains 0.1 to 0.5 % by weight of manganese.

4. Use of an aluminium alloy according to claim 1, characterized in that it contains a maximum of 0.1 % by weight, preferably a max. of 0.05 % by weight of copper.

5. Use of an aluminium alloy according to claim 1, characterized in that it contains 0.1 to 0.3 % by weight of copper.

## Revendications

1. Utilisation d'un alliage d'aluminium consistant en :
0,9 à 1,7 % en poids de fer,
0,1 à 0,8 % en poids de manganèse,
0,1 % en poids maximum de silicium,
0,3 % en poids maximum de cuivre.
le reste d'aluminium avec d'autres éléments secondaires isolément < 0,05 % en poids, au total < 0,15 % en poids, la somme des éléments fer et manganèse étant au maximum de 1,9 % en poids,
comme matériau pour feuilles de cathodes dans les condensateurs à électrolyte.

2. Utilisation d'un alliage d'aluminium selon la revendication 1, caractérisé en ce qu'il contient 1,0 à 1,5 % en poids de fer.

3. Utilisation d'un alliage d'aluminium selon la revendication 1, caractérisé en ce qu'il contient 0,1 à 0,5 % en poids de manganèse.

4. Utilisation d'un alliage d'aluminium selon la revendication 1, caractérisé en ce qu'il contient au maximum 0,1 % en poids de cuivre, de préférence au maximum 0,05 % en poids.

5. Utilisation d'un alliage d'aluminium selon la revendication 1, caractérisé en ce qu'il contient 0,1 à 0,3 % en poids de cuivre.
